(19) **Europäisches Patentamt / European Patent Office / Office européen des brevets**

(11) **EP 3 027 345 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**13.12.2023   Patentblatt 2023/50**

(45) Hinweis auf die Patenterteilung:
**08.11.2017   Patentblatt 2017/45**

(21) Anmeldenummer: **14745075.3**

(22) Anmeldetag: **15.07.2014**

(51) Internationale Patentklassifikation (IPC):
**B23F 19/10** (2006.01)        **B23F 5/16** (2006.01)
**B23F 21/00** (2006.01)

(52) Gemeinsame Patentklassifikation (CPC):
**B23F 19/102; A47G 25/86; B23F 5/16; B23F 5/163; B23F 5/20; B23F 19/00; B23F 19/02; B23F 19/10; B23F 21/00; B23Q 15/007**

(86) Internationale Anmeldenummer:
**PCT/EP2014/001930**

(87) Internationale Veröffentlichungsnummer:
**WO 2015/014448 (05.02.2015 Gazette 2015/05)**

(54) **VERFAHREN ZUM BEARBEITEN VON ZAHNKANTEN UND DAZU AUSGELEGTE BEARBEITUNGSSTATION**

METHOD FOR MACHINING TOOTH EDGES AND MACHINING STATION DESIGNED FOR THIS PURPOSE

PROCÉDÉ D'USINAGE DES ARÊTES DE DENTS ET STATION D'USINAGE POUR METTRE EN OEUVRE LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2013   DE 102013012797**

(43) Veröffentlichungstag der Anmeldung:
**08.06.2016   Patentblatt 2016/23**

(73) Patentinhaber: **Gleason-Pfauter Maschinenfabrik GmbH**
**71636 Ludwigsburg (DE)**

(72) Erfinder:
• **KLEINBACH, Kurt**
**71717 Beilstein (DE)**
• **KRESCHEL, Jürgen**
**71282 Hemmingen (DE)**
• **PHILIPPIN, Matthias**
**71277 Rutesheim (DE)**
• **WEPPELMANN, Edgar**
**71679 Asperg (DE)**

(74) Vertreter: **Leinweber & Zimmermann Patentanwalts-PartG mbB**
**European Patent Attorneys**
**Viktualienmarkt 8**
**80331 München (DE)**

(56) Entgegenhaltungen:
| | |
|---|---|
| EP-A1- 2 246 138 | EP-A1- 2 520 391 |
| EP-A1- 2 537 615 | EP-A2- 0 107 826 |
| EP-B1- 1 495 824 | WO-A1-2012/152660 |
| WO-A1-2012/159942 | WO-A2-2009/017248 |
| DE-A1- 4 319 326 | DE-A1-102007 015 357 |
| DE-A1-102009 003 601 | DE-A1-102009 018 405 |
| DE-B1- 2 157 619 | DE-B3-102006 019 325 |
| DE-C- 243 514 | DE-C1- 3 734 653 |
| DE-C2- 3 312 984 | FR-A- 1 447 376 |
| GB-A- 818 135 | JP-A- S 618 221 |
| JP-A- S6 451 224 | US-A- 2 295 148 |
| US-A- 2 295 148 | US-A- 2 683 399 |
| US-A- 3 264 940 | |

• "Verfahren und Maschinen" In: Thomas Bausch: "Innovative Zahnradfertigung", 2006, Expert-Verlag vol. 3, page 322,325,

EP 3 027 345 B2

**Beschreibung**

Die Erfindung betrifft ein Verfahren zum Bearbeiten der zwischen einer Stirnseite und den Zahnflanken einer Verzahnung ausgebildeten Zahnkanten sowie eine dazu ausgelegte Bearbeitungsstation und eine eine solche Bearbeitungsstation aufweisende Verzahnungsmaschine.

Derartige Verfahren sind in der Technik bekannt, beispielsweise durch die DE 10 2009 019 433 A1. Hintergrund der Zahnkantenbearbeitung ist, daß bei der spanenden Herstellung von Verzahnungen an den endseitigen Zahnkanten ein Grat entsteht, der aus verschiedenen Gründen zu beseitigen ist. Beispielsweise soll die Stirnfläche des Zahnrads in nachfolgenden Arbeitsgängen als planare Spann- oder Bestimmungsfläche dienen, deren Planarität durch den Grat gestört wäre. Des Weiteren zieht der Grat nach erfolgter Härtung die Gefahr nach sich, daß er beim späteren Lauf des Zahnrads in einem Getriebe abspringt und eine Beschädigung der Zahnflanken oder von Getriebebauteilen herbeiführt. Abgesehen davon stellt ein solcher Grat auch eine Verletzungsgefahr bei der Handhabung der Verzahnungen bzw. verzahnten Werkstücke dar. Würde man nur den Grat beseitigen und nicht die Zahnkante selbst bearbeiten, besteht die Gefahr, daß letztere beim Härten durch Überkohlung glashart wird und dann unter Belastung ausbricht.

Um diesen Nachteilen entgegenzutreten, sind in der Technik mehrere Verfahren entwickelt worden. Ein solches Verfahren, das beispielsweise in der EP 1 270 127 A1 offenbart ist, betrifft die plastische Umformung der Zahnkante in eine Fase, bei der Material des Werkstücks im Bereich der Zahnkänte durch ein damit in Zahneingriff abwälzendes Anfasrad verdrängt wird. Die dabei entstehenden Sekundärgrate müssen allerdings darauf folgend ebenfalls entfernt werden, da sie für eine nachfolgende Hartbearbeitung wie beispielsweise Honen oder Schleifen ein Problem hinsichtlich einer vorzeitigen Abnutzung der jeweiligen Hartfeinbearbeitungswerkzeuge darstellen. In der DE 10 2009 018 405 A1 wird gelehrt, wie sich derartige Sekundärgrate geeignet beseitigen lassen.

Alternativ zu diesem Anfasen durch plastisches Drücken besteht die Möglichkeit, eine Fase an der Zahnkante durch Schneiden zu erzeugen. Gemäß der DE 10 2009 019 433 wird dazu ein im Wesentlichen zylinderförmiges Bearbeitungswerkzeug, das mindestens eine Schneide aufweist, auf einer Werkzeugspindel aufgespannt. Nach radialer Zustellung wird durch Bearbeitungseingriff dieses Anfaswerkzeugs mit einer Stirnseite des verzahnten Werkstücks eine Fase an den Zahnkanten der Verzahnung erzeugt. Bei der in DE 10 2009 019 433 offenbarten Gestaltung läßt sich die Schneidrichtung des Anfaswerkzeugs bei beiden Stirnseiten des verzahnten Werkstücks immer zum Zentrum der Verzahnung hin richten. Die Erfindung betrifft eine Zahnkantenbearbeitung mit einer schneidenden Erzeugung einer Fase an der Zahnkante.

US 2,683,399 A offenbart ein Verfahren zum Abrunden der Ecken zwischen Zahnflanken und Zahnkopf, bei dem ein verzahntes Werkzeug unter einem Achskreuzwinkel mit dem die abzurundenden Zähne tragenden Werkstück in Eingriff gebracht wird.

JP S 618221 A offenbart zwei über ein Schabrad miteinander verbundene Chamfering-Cutter und deren Rotationsachse unter einem Achskreuzwinkel in einer gemeinsamen Bearbeitung des Werkstücks.

GB 818135 A offenbart ein Verfahren zur Abrundung der Ecken eines Werkrads, die an den Schnitten zwischen Kopf- und Seitenflächen des Zahns gebildet sind.

DE 2 157 619 A offenbart eine Vorrichtung zum Entgraten oder Brechen der Kanten an den Zahnenden von Zahnrädern, bei der zwei koaxial und drehfest mit einem Führungsrad aufgespannte verzahnte Schneidwerkzeuge unter einem Achskreuzwinkel in Bearbeitungseingriff mit einem Werkstück gebracht werden.

Der vorliegenden Erfindung liegt dabei die Aufgabe zugrunde, ein Verfahren der eingangs genannten Art insbesondere im Hinblick auf eine höhere Flexibilität auch betreffend der Form der die Verzahnung tragenden, zu bearbeitenden Werkstücke zu verbessern.

Diese Aufgabe wird von der Erfindung in verfahrenstechnischer Hinsicht durch eine Weiterbildung des eingangs genannten Verfahrens mit den Merkmalen von Anspruch 1 gebildet.

Der Erfindung liegt somit eine gegenüber dem oben mit Bezug auf DE 10 2009 019 433 erläuterten Stand der Technik völlig unterschiedliche Kinematik der beteiligten Maschinenachsen zugrunde. So ist das Bearbeitungswerkzeug verzahnt, und die Verzahnungsachse steht unter einem Achskreuzwinkel zu der Verzahnungsachse der Verzahnung, deren Kanten bearbeitet werden. Die Bewegungskinematik ist daher die eines Schraubradgetriebes, das durch eine windschiefe Anordnung der jeweiligen Drehachsen charakterisiert ist. Den üblicherweise mit $\Sigma$ bezeichneten Achskreuzwinkel erhält man dadurch, daß ausgehend von parallelen Drehachsen eine der Drehachsen um eine Verbindungsrichtung der Zentren der zu bearbeitenden Verzahnung und des Bearbeitungswerkzeugs (gemeinsames Lot auf die Rotationsachsen) verschwenkt wird. Im Übrigen ist die Bedeutung des Achskreuzwinkels dem Verzahnungsfachmann ohnehin beispielsweise durch das Wälzschälen (Power-Skiving) bekannt, eine anschauliche Darstellung der beim Wälzschälen auftretenden Maschinenachsen, Kinematik und Schneidverhältnisse sowie Begriffsbestimmungen wird z. B. in der EP 2 537 615 A1 gegeben.

Durch den Achskreuzwinkel wird somit ein Schneidmechanismus erzeugt, bei dem die Schnittgeschwindigkeit von dem Achskreuzwinkel und auch der Drehzahl des Bearbeitungswerkzeugs abhängt. Die Schneidkanten des Werkzeugs sind durch die Kanten der Werkzeugverzahnung gebildet.

So kann die Schnittrichtung der Schneidbewegung eine durch den von Null verschiedenen Achskreuzwinkel bewirkte Richtungskomponente aufweisen, die entlang der an der bearbeiteten Zahnkante anschließenden Zahnflanke in Zahnbreitenrichtung verläuft.

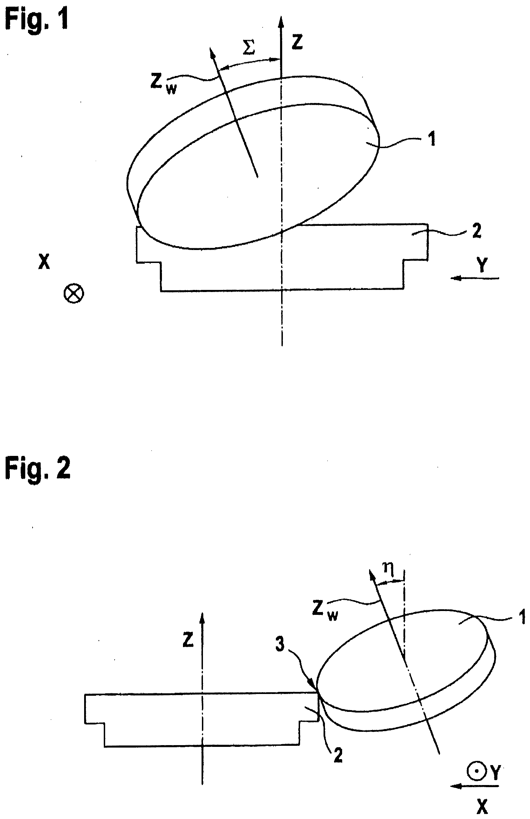

Um der Schnittrichtung der Schneidbewegung eine orthogonal zur Zahnflanke verlaufende Richtungskomponente zu verleihen, wird erfindungsgemäß ein von Null verschiedener Neigungswinkel der Rotationsachse des Bearbeitungswerkzeugs gegenüber einer orthogonal zur Verbindungsrichtung zwischen den Zentren von Verzahnung und Bearbeitungswerkzeug stehenden Ebene eingestellt. Das Werkzeug wird somit in Richtung auf die Werkstückachse Z hin gekippt (Fig. 2). Dadurch läßt sich besonders einfach eine profilbildende Kontaktlinie erzeugen, die über die Zahnkante führt. Dem Neigungswinkel entspricht auch eine Neigung der Werkzeugbezugsebene bezüglich der Berührebene.

Die dadurch bestimmte gegenseitige Achslage im Bearbeitungseingriff läßt sich daher (ausgehend von parallelen Achsen) durch Drehung um zwei linear unabhängige Drehachsen einstellen. Es kann aber auch ein Achskreuzwinkel durch Drehung um nur eine Achse eingestellt werden und dazu eine Verschiebung mit Verschiebungskomponente senkrecht zur Verbindungsachse der Zentren (bisheriges Gemeinlot) und senkrecht zu einer von den Rotationsachsen von Verzahnung und Bearbeitungswerkzeug durchgeführt werden. Eine solcheVerschiebung erkennt man an einem von Null verschiedenen Offset zwischen dem in Projektion gesehenen Achskreuzpunkt und dem Eingriffsbereich (Berührpunkt) der Bearbeitung. Der ursprünglich eingestellte Achskreuzwinkel läßt sich nach dieser Verschiebung als Zerlegung in einen effektiven Achskreuzwinkel und den Neigungswinkel ansehen.

Bei der Verbindungsrichtung zwischen den Zentren handelt es sich zudem um eine Radialrichtung, die in dem Verfahren auch als Zustellachsrichtung nutzbar ist, für eine reine Zustellung oder für einen Tauchvorschub.

Bevorzugt beträgt der Achskreuzwinkel wenigstens 4°, weiter bevorzugt wenigstens 8°, insbesondere wenigstens 12°. Im Übrigen sollte der Achskreuzwinkel zweckmäßig nicht mehr als 45° betragen, bevorzugt nicht mehr als 35°, insbesondere nicht mehr als 25°. Dies führt zu ausreichend hohen Schnittgeschwindigkeiten bei gleichzeitig nicht zu hohen Anforderungen an die Auslegung des Bearbeitungswerkzeugs.

Hinsichtlich des Neigungswinkels wird es bevorzugt, daß dieser weinigstens 8°, bevorzugt wenigstens 16°, insbesondere wenigstens 24° beträgt. Andererseits sollte er 80° nicht übersteigen, bevorzugt höchstens 60°, insbesondere höchstens 40° betragen. Diese Neigungswinkeleinstellung sorgt, insbesondere in Kombination mit der obigen Achskreuzwinkeleinstellung, für einen geeigneten Verlauf der profilbildenden Kontaktlinien.

Wie oben bereits erläutert ist ein die Schnittgeschwindigkeit mitbestimmender Faktor die Drehzahl für die Drehung des Bearbeitungswerkzeugs um seine Rotationsachse. Diese wird bei festgelegter Einstellung der übrigen Bewegungsachsen bevorzugt so eingestellt, daß die Schnittgeschwindigkeit wenigstens 10 m/min, bevorzugt wenigstens 30 m/min, insbesondere wenigstens 50 m/min beträgt. Als Obergrenze für die Schnittgeschwindigkeit ist 450 m/min, bevorzugt höchstens 300 m/min, insbesondere höchstens 200 m/min, auch 150 m/min vorgesehen. Damit wird ein geeigneter Kompromiß zwischen nicht zu hohen Bearbeitungszeiten einerseits und einer ausreichenden Werkzeugstandzeit andererseits erreicht.

Damit die Zahnflanken jedenfalls zwischen Fuß- und Kopfflanken einer vollständigen Bearbeitung unterliegen, sind insoweit die profilbildenden Kontaktlinien über diesen gesamten Zahnkantenbereich einer Zahnlücke zu schieben. Dazu sieht die Erfindung grundsätzlich mehrere Möglichkeiten vor.

Zum einen kann man das Bearbeitungswerkzeug und die zu bearbeitende Verzahnung eine Relativbewegung mit einer zur Verzahnungsachse der zu bearbeitenden Verzahnung parallelen Richtungskomponente ausführen lassen. Diese kann, ähnlich wie beim Wälzschälen, z.B. eine Bewegung längs der Verzahnungsachse oder längs der Werkzeugachse sein. Diese Variante ist insbesondere bei großen Neigungswinkeln vorteilhaft. Es ist dabei denkbar, daß einige Zahnkanten der zu bearbeitenden Verzahnung, jedenfalls einige Bereiche dieser Zahnkanten mit einigen Bereichen der an den beispielsweise Zahnkanten der Verzahnung des Bearbeitungswerkzeugs vorgesehenen Schneidkantenbereichen überhaupt nicht in Berührung kommen.

Andererseits muß das Bearbeitungswerkzeug, auch wenn dies eine bevorzugte Variante darstellt, nicht voll verzahnt sein. Grundsätzlich würde ein einzelner mit Schneidkante versehener Zahn ausreichen. In diesem Fall wäre die axiale Vorschubbewegungsgeschwindigkeit entsprechend gering zu wählen.

Gemäß einer nicht erfindungsgemäßen Variante läßt sich auch eine diese Wirkung entfaltende Struktur in das Bearbeitungswerkzeug selbst einarbeiten. Genaueres hierzu wird weiter unten anhand der Vorrichtungsansprüche erläutert.

Bei dieser Variante kann unter Umständen vollständig auf eine z.B. parallel zur Verzahnungsachse oder Werkzeugachse geführte Vörschubbewegung verzichtet werden. Dies ist insbesondere dann vorteilhaft, wenn das die zu bearbeitende Verzahnung aufweisende Werkstück noch eine nahegelegene Schulter aufweist, die durch die Zahnkantenbearbeitung nicht beeinträchtigt werden darf. Mehrere unterschiedliche Zähne des Werkzeugs kommen dann in Eingriff mit einer jeweiligen Lücke und bearbeiten dabei (segmentweise) die beiden Zahnkanten einer jeden Lücke (Überrollung).

In vorrichtungstechnischer Hinsicht stellt die Erfindung eine Bearbeitungsstation zur Bearbeitung der zwischen jeder Stirnseite und den Zahnflanken einer Verzahnung ausgebildeten Zahnkanten mit den Merkmalen von Anspruch 8 bereit. Wälzeingriff zwischen der zu bearbeitenden Verzahnung und einer Verzahnung des Bearbeitungswerkzeugs steuert.

Die Vorteile der erfindungsgemäßen Bearbeitungsstation ergeben sich aus den Vorteilen des erfindungsgemäßen Verfahrens. So kann die Bearbeitungsstation bevorzugt eine der Zustellung dienende Linearachse, insbesondere erste Maschinenachse mit einer Richtungskomponente, insbesondere radial zur Werkstückspindelachse, aufweisen. Zweckmäßig ist auch eine Maschinenachse vorgesehen, mit der eine Relativbewegung zwischen Werkstückspindel und Werkzeugspindel mit Bewegungskomponente parallel zur Werkstückspindelachse wirken kann. Damit läßt sich zum einen eine axiale Vorschubbewegung realisieren. Zum anderen läßt sich die axiale Position des Bearbeitungswerkzeugs verändern, was insbesondere bei der Bearbeitung von Werkstücken unterschiedlicher Verzahnungsbreite zweckmäßig ist, im Übrigen auch zur axialen gegenseitigen Positionierung zwischen der Bearbeitung der Zahnkanten an einer Stirnseite und der der anderen Stirnseite einsetzbar ist. Des Weiteren erfindungsgemäß ein von Null verschiedener Neigungswinkel der Werkzeugspindelachse gegenüber einer orthogonal zur Verbindungsrichtung zwischen den Zentren von Verzahnung und Bearbeitungswerkzeug stehenden Ebene einstellbar.

In einer denkbaren Ausführungsform ist eine weitere Maschinendrehachse vorgesehen, die eine zur der Einstellung des Achskreuzwinkels dienende Achse und zur Werkstückspindelachse orthogonale Achskomponente aufweist. Dadurch werden Achskreuzwinkel und Neigungswinkel über zwei Maschinendrehachsen eingestellt.

In einer anderen, nochmals bevorzugteren Ausführungsform ist allerdings eine zweite Maschinenachse vorgesehen, die eine Komponente in einer orthogonal zur Werkstückspindelachse laufenden Ebene aufweist, welche von einer Projektion der ersten Maschinenachse auf diese Ebene linear unabhängig ist. In einer zweckmäßigen Gestaltung kann dies ein Kreuzschlitten mit radialer Zustellrichtung X einerseits und dazu der auch zur Werkstückspindelachse orthogonalen Bewegungsrichtung (Y) andererseits sein. Ein ursprünglich durch Drehung um die Radialachse (X) eingestellter Achskreuzwinkel erhält durch die Verschiebung des Shift-Schlittens in Y-Richtung letztlich eine Neigungskomponente $\eta$, da sich die Werkzeugspindelachsorientierung während der Verschiebung nicht ändert, wohl aber die Verbindungsachse zwischen den Zentren von Werkstück und Werkzeug.

Hinsichtlich der Werkzeugform kann das Bearbeitungswerkzeug bevorzugt scheibenförmig sein, insbesondere mit einer axialen Abmessung von nicht größer als 10 cm, bevorzugt nicht größer als 7 cm, insbesondere nicht größer als 4 cm. Die Verzahnung des Bearbeitungswerkzeugs ist zweckmäßig im Treppenschliff geschliffen, weist somit eine Grundform auf, die gerne auch beim Power-Skiving herangezogen wird.

Des Weiteren kann das Bearbeitungswerkzeug eine die Wirkung einer Vorschubbewegung parallel zur Werkzeugachse entfaltende Struktur eingearbeitet haben. Dies wird bevorzugt dadurch erreicht, daß das Bearbeitungswerkzeug Bereiche mit gemessen an seiner Rotationsachse unterschiedlichen Höhen seiner (Spanflächen-)Verzahnung aufweist. Da die Verzahnung die Spanflächen mit den Schneidkanten trägt, offenbart die Erfindung somit ebenfalls als eigenständig schutzfähig ein Bearbeitungswerkzeug zur Bearbeitung der zwischen jeder Stirnseite und den Zahnflanken einer Verzahnung ausgebildeten Zahnkanten durch schneidende Materialabtragung von den Zahnkanten, bei der die dazu vorgesehenen, an die Schneiden des Bearbeitungswerkzeugs angrenzenden Spanflächen der jeweiligen Zähne des Bearbeitungswerkzeugs gemessen an der Rotationsachse des Bearbeitungswerkzeugs unterschiedlichen Höhen aufweisen.

In einer diesbezüglich speziellen Ausführungsform des Bearbeitungswerkzeugs steigen die Spanflächen desselben wenigstens teilweise wendelförmig an. Die Grundform der Spanflächen kann zudem durch Treppenschliff ausgebildet sein.

Die durch das Ansteigen in einem Umlauf gewonnene Ganghöhe ist dann neben der Relativlage zwischen den Rotationsachsen von Bearbeitungswerkzeug und Verzahnung mitbestimmend für die ohne zusätzlichen Vorschub gebildete Ausdehnung des Kantenbereichs, über den die profilbildenden Kontaktlinien verlaufen. Sie entspricht bevorzugt dem sich beim Durchlaufen einer Zahnlücke ergebenden Zahnbreitenversatz einer Profillinie.

Des Weiteren wird von der Erfindung bereitgestellt eine Verzahnungsmaschine zur Bearbeitung von Verzahnungen mit einer solchen Bearbeitungsstation. Diese kann insbesondere mit einer weiteren Arbeitsstation versehen sein, welche zur Erzeugung der zu bearbeitenden Verzahnung im Weichbearbeitungsverfahren dient, beispielsweise zum Wälzfräsen, Wälzstoßen oder Power-Skiving (Wälzschälen). Des Weiteren ist das erfindungsgemäße Verfahren auch in Form eines Steuerprogramms unter Schutz gestellt.

Das erfindungsgemäße Verfahren läßt sich sowohl für die Zahnkantenbearbeitung von Innenverzahnungen wie auch die von Außenverzahnungen anwenden.

Weitere Merkmale, Einzelheiten und Vorteile der Erfindung ergeben sich aus der nachfolgenden Beschreibung mit Bezug auf die beiliegenden Figuren, von denen

Fig. 1    eine schematische Darstellung der Eingriffsverhältnisse zwischen Bearbeitungswerkzeug und bearbeiteter Verzahnung aus einer ersten Blickrichtung zeigt,

Fig. 2    den in Fig. 1 dargestellten Eingriff schematisch aus einer zweiten Blickrichtung zeigt,

Fig. 3a     eine bei der Zahnkantenbearbeitung eingesetzte Achslage in Vergleich zu einer in

Fig. 3b     gezeigten, beim Power-Skiving eingesetzten Achslage zeigt,

Fig. 4      das Profil eines Zahnkantenbearbeitungswerkzeugs in Vergleich mit einem Profil eines die zugrunde liegende Verzahnung mittels Power-Skiving herstellenden Werkzeugs zeigt, und

Fig. 5      eine spezielle Form eines Bearbeitungswerkzeugs zeigt.

In Fig. 1 ist die dem Verfahren zugrunde liegende Maschinenachskinematik dargestellt. Ein Werkstück mit einer Verzahnung 2 ist in Fig. 1 derart orientiert, daß seine Verzahnungsachse Z vertikal verläuft. Die einzelnen Zähne der Verzahnung 2 sind allerdings in der schematischen Darstellung von Fig. 1 nicht eingezeichnet. In Projektion auf die Papierebene von Fig. 1, das heißt orthogonal zu der radialen Zustellrichtung X, schließt die Verzahnungsachse Z der Verzahnung 2 einen Achskreuzwinkel $\Sigma$ mit der Rotationsachse $Z_w$ eines Bearbeitungswerkzeugs 1 ein. Dieser beträgt in dem gezeigten Ausführungsbeispiel 20°. Die eingezeichneten Achsen X, Z und Y bilden für dieses Ausführungsbeispiel ein rechtwinkliges Koordinatensystem.

In Fig. 2 sind die Eingriffsverhältnisse noch aus Blickrichtung Y dargestellt, also einer um 90° gegenüber der Blickrichtung in Fig. 1 gedrehten Blickrichtung. Aus Fig. 2 ist ersichtlich, daß das Bearbeitungswerkzeug 1 auch gegenüber einer orthogonal zur Richtung X stehenden Ebene geneigt ist, und zwar um den Winkel $\eta$, der hier 30° beträgt. In der Darstellung von Fig. 2 werden die Zahnkanten der Verzahnung 2 bearbeitet, die zwischen den Zahnflanken der Verzahnung 2 und der oberen Stirnseite 3 ausgebildet sind. Zur Bearbeitung der an der unteren Stirnseite ausgebildeten Kanten kann das Werkstück umgedreht werden, so daß die in Fig. 2 untere Stirnfläche zur oberen Stirnfläche wird, während die Werkzeuglage die gleiche bleibt wie beim Bearbeiten der in Fig. 2 dargestellten Situation. Alternativ läßt sich diese gegenseitige Lage zwischen Werkstück und Werkzeug auch durch eine werkzeugseitige Lageänderung bewirken. Dazu kann es besonders vorgesehen werden, daß die Verschwenkbarkeit des Werkzeugs um die in Fig. 2 mit X bezeichnete Achse um 180° oder mehr realisierbar ist.

Grundsätzlich besteht sowohl die Möglichkeit, von innen nach außen (aus der Lücke) zu schneiden oder umgekehrt (in die Lücke). Für einen Wechsel zwischen diesen beiden Schneidarten ist die Drehrichtung entsprechend umzudrehen.

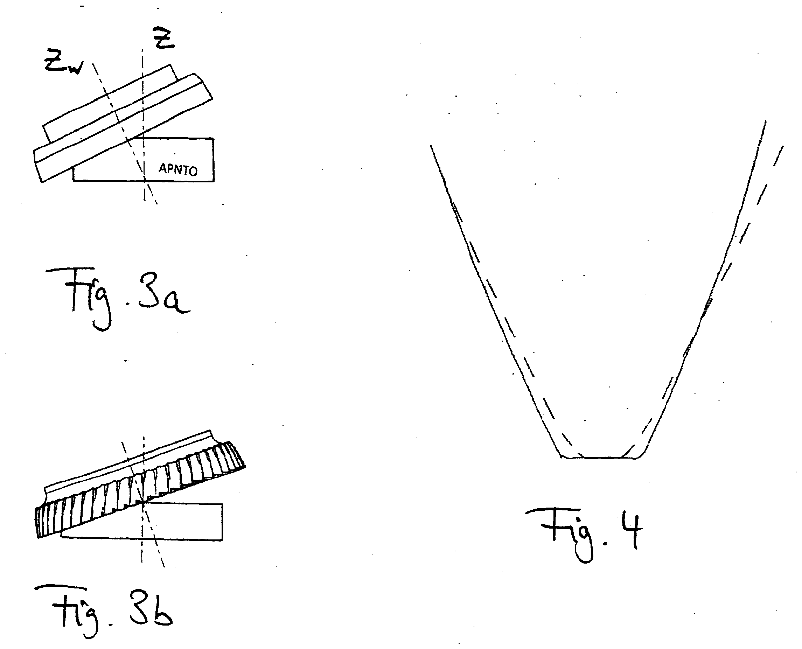

Wie oben bereits erläutert, ist zur Einstellung der jeweiligen Achslage eine zweite Maschinendrehachse nicht erforderlich. Vielmehr kann, ausgehend von der in Fig. 3b gezeigten Achslage, die beim Power-Skiving auftritt und bei der in der Projektion gesehen der Eingriffsbereich zwischen Werkstück und Werkzeug im Bereich des Achskreuzpunkts liegt, auch eine Shift-Bewegung des Werkzeugs (in Fig. 3 nach links) vorgenommen werden. Bei dieser Shift-Bewegung ändert sich die Achsorientierung der Werkzeugachse nicht, aber das Zentrum des Bearbeitungswerkzeugs wird verschoben. Die orthogonal zur Verbindungslinie zwischen den Zentren stehende Ebene, in Fig. 3b die Papierebene, wird somit bildlich gesprochen aus der Papierebene herausgekippt, um in Fig. 3a wieder senkrecht auf der neuen Verbindungslinie zu stehen. In Fig. 3a liegt dann die Werkzeugdrehachse nicht mehr in dieser Ebene, sondern ist gegenüber wiederum unter einem Neigungswinkel in Richtung auf die Werkstückdrehachse geneigt.

In Fig. 3a ist die Verzahnung gegenüber der Darstellung von Fig. 3b weggelassen. Damit soll angedeutet werden, daß das Profil des Bearbeitungswerkzeugs für die Zahnkantenbearbeitung nicht mit dem Verzahnungsprofil des in Fig. 3b dargestellten Power-Skivingwerkzeugs übereinstimmt. Vielmehr ist das Werkzeugprofil des Zahnkantenbearbeitungswerkzeugs entsprechend modifiziert, da ja zur Erzeugung der Fase die Kante in der Stirnebene zu brechen ist und der Geschwindigkeitsvektor dann parallel zur Fase der Oberfläche liegen muß. Diese Modifizierung ist in Fig. 4 beispielhaft dargestellt, in der die durchgezogene Linie das Zahnprofil des für das Power-Skiving eingesetzte Werkzeug darstellt, während die gestrichelt dargestellte Linie das entsprechende Profil des Anfaswerkzeugs zeigt.

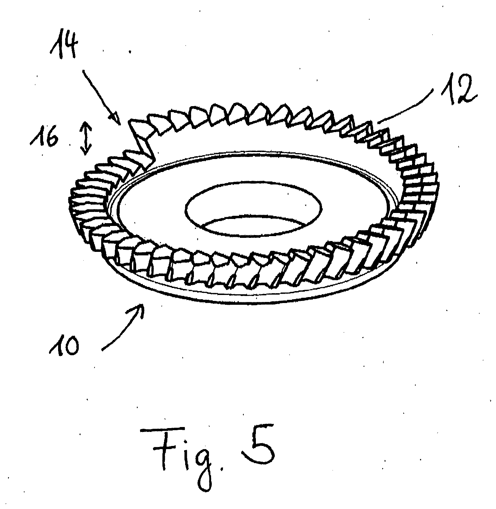

Auf eine axiale Werkzeugbewegung während der Zahnkantenbearbeitung an einer Stirnseite könnte in einer nicht erfindungsgemäßen Variante verzichtet werden, wenn das in Fig. 5 dargestellte Bearbeitungswerkzeug 10 zum Einsatz kommt. Dessen Verzahnung 12 steigt gegenüber der Rotationsachse $Z_w$ in Form einer kontinuierlich steigenden Wendel an und weist daher an einer Stelle 14 einen Höhensprung 16 auf. Eine einmalige vollständige Drehung des Bearbeitungswerkzeugs 10 um seine Rotationsachse führt dazu, daß die profilbildenden Kontaktlinien voll über beide Zahnkanten einer Zahnlücke der zu bearbeitenden Verzahnung geschoben werden, wodurch eine besonders zeitsparende Zahnkantenbearbeitung erfolgt. Die kontinuierliche Wendelform ist bevorzugt jedoch optional, es könnten beispielsweise auch mehrere abgestufte Bereiche gebildet werden.

Grundsätzlich ist nach dieser Bearbeitung durch schneidendes Erzeugen der Fase an den Zahnkanten ein zweiter Schnitt anders als bei durch Drücken erzeugten Fasen nicht erforderlich. Die Bearbeitungszeit der Werkstücke wird dadurch verringert.

Zur weiteren Erläuterung der Erfindung wird im Folgenden noch ein primär der Anschauung dienendes Verständnis der Schneidverhältnisse gegeben, die dem erfindungsgemäßen Verfahren zugrunde liegen.

Dazu wird zunächst vereinfachend ein Linienelement d< einer Schneidkante des Werkzeugs betrachtet, das auf einer Zahnkante der Verzahnung des Bearbeitungswerkzeugs liegt, also in einer Ebene orthogonal zur Rotationsachse $Z_w$ des Bearbeitungswerkzeugs. In einer Momentaufnahme läßt sich der Richtungsvektor des Schneidkantenelements d< beispielhaft beschreiben durch $(\cos \theta, \sin \theta, 0)$ wobei $\theta$ den Winkel darstellt, den die Orientierung des Schneidkantenelements d< mit einer radialen Achse, in der Momentaufnahme beispielsweise der Achse $X_w$ des Ruhesystems des Bearbeitungswerkzeugs $(X_w, Y_w, Z_w)$ einnimmt.

Eine Bewegung entlang der Orientierung der Schneidkante selbst bewirkt gegenüber einem unbewegten Werkstück kein Schneiden, und das Schneidkantenelement d< bewegt sich immer in der orthogonal zur Rotationsachse $Z_w$ stehenden Ebene. Zu Erläuterungszwecken wird daher im Folgenden von einer (absoluten) Schnittrichtung ausgegangen, die in dieser Ebene liegt und orthogonal zum Schneidkantenelement d< verläuft, mithin einer Schnittrichtung im Ruhesystem des Bearbeitungswerkzeugs von $s_w = (-\sin \theta, \cos \theta, 0)$.

Betrachtet man zunächst nur den zwischen den Rotationsachsen eingestellten Achskreuzwinkel $\Sigma$, so entspricht dies einer Verkippung des Werkzeugs um die Zustellachse X, so daß sich die Schnittrichtung noch ohne Neigung $\eta$ aber mit Achskreuzwinkel $\Sigma$ im raumfesten Koordinatensystem $(X, Y, Z)$ darstellen läßt als $s_\Sigma = (-\sin \theta, \cos \theta \cos \Sigma, \cos \theta \sin \Sigma)$.

Aus der dritten Komponente dieser Schnittrichtung ist im Übrigen erkennbar die Abhängigkeit der Schnittrichtungskomponente parallel zur Verzahnungsachse vom Achskreuzwinkel.

Bleibt man bei dem Bild des Achskreuzwinkels $\Sigma$ ohne zusätzlichen Neigungswinkel $\eta$, ist dies die grundlegende Maschinenachsenkonstellation des Power-Skivings, bei der ausgehend vom Bild der bereits durch Power-Skiving in maximaler Radialzustellung fertiggestellten Zahnflankenflächen die Schnittrichtung in der Relativbewegung gegenüber der ebenfalls rotierenden zu bearbeitenden Verzahnung keine Komponente orthogonal zur Zahnflanke aufweisen darf. Simuliert man dies bezüglich einer Momentaufnahme dahin gehend, daß in einem um die Verzahnungsachse Z gedrehten Koordinatensystem die erste Komponente der Schnittrichtung die (verschwindende) Komponente orthogonal zur (dann raumfesten) Zahnflanke und die zweite Komponente entlang der Zahnflanke in Zahnhöhenrichtung darstellt, ist eine Drehung um den Winkel $\chi$ erforderlich, so daß für $s_\Sigma$ die erste Komponente verschwindet, also eine Drehung, die die Beziehung $\tan \chi = \tan \theta / \cos \Sigma$ erfüllt.

Bei der bevorzugten Ausführungsform der Erfindung ist jedoch die Rotationsachse $Z_w$ im raumfesten System zusätzlich noch um die Achse Y verschwenkt, und zwar um Neigungswinkel $\eta$. Im raumfesten System $(X, Y, Z)$ nimmt der Vektor der (absoluten) Schnittrichtung somit die Form an

$$s_{\Sigma,\eta} = (\cos \theta \sin \Sigma \sin \eta - \sin \theta \cos \eta, \cos \theta \cos \Sigma, \cos \theta \sin \Sigma \cos \eta + \sin \theta \sin \eta).$$

Wechselt man in das um $\chi$ gedrehte System, in dem die Schnittrichtung die anschaulichere Form $s_{\Sigma,\eta,\chi} = (s_\perp, s_i, s_Z$ annimmt, erhält man für die Komponente senkrecht zur Zahnflanke dann

$$s_\perp = (\sin \Sigma \sin \eta \cos \theta - \cos \eta \sin \theta) * \cos \chi + \cos \Sigma \cos \theta \sin \chi$$

Man erhält somit eine von Null verschiedene Schnittrichtungskomponente für $s_\perp$, die dafür sorgt, daß die Profillinien über die Zahnkante geschoben werden. Setzt man zur einfacheren Deutung $\theta = 0$ ein, so vereinfacht sich das Ergebnis für $s_\perp$ zu

$$s_\perp \big|_{\theta = 0} = \sin \Sigma \sin \eta.$$

Anschaulich gesehen sorgt somit der von Null verschiedene Achskreuzwinkel $\Sigma$ für die Realisierbarkeit einer senkrecht zur Zahnflanke verlaufenden Schneidrichtungskomponente, in die in der bevorzugten Ausführungsform ebenfalls der Sinus des zusätzlichen Neigungswinkels eingeht. In dieser bevorzugten Ausführungsform ist somit der überwiegende Bestandteil der Komponente der Schnittrichtung senkrecht zur Zahnflanke der zu bearbeitenden Verzahnung abhängig von dem Faktor $\sin \Sigma * \sin \eta$.

Im Übrigen ist die Erfindung nicht auf die in der Figurenbeschreibung beschriebenen Ausführungsbeispiele beschränkt.

**Patentansprüche**

1. Verfahren zum Bearbeiten der zwischen einer Stirnseite (3) und den Zahnflanken einer Verzahnung (2) ausgebildeten Zahnkanten, bei dem ein mit einer Schneide versehenes Bearbeitungswerkzeug (1) schneidend Material von den Zahnkanten der Verzahnung (2) abnimmt, die um ihre Verzahnungsachse (Z) rotiert und dadurch eine Fase an den Zahnkanten erzeugt, wobei

   das Bearbeitungswerkzeug verzahnt ist und für die Materialabnahme um seine Verzahnungsachse ($Z_w$) rotierend unter einem von Null verschiedenen Achskreuzwinkel ($\Sigma$) zwischen den Rotationsachsen (Z, $Z_w$) des Bearbeitungswerkzeugs und der zu bearbeitenden Verzahnung (2) in Wälzeingriff mit der zu bearbeitenden Verzahnung gebracht wird,
   **dadurch gekennzeichnet, dass** die Schnittrichtung (s) der Schneidbewegung eine durch einen von Null verschiedenen Neigungswinkel ($\eta$) der Rotationsachse des Bearbeitungswerkzeugs gegenüber einer orthogonal zur Verbindungsrichtung zwischen den Zentren von Verzahnung und Bearbeitungswerkzeug stehenden Ebene bewirkte, orthogonal zur Zahnflanke verlaufende Richtungskomponente aufweist, und dass man das Bearbeitungswerkzeug und die zu bearbeitende Verzahnung eine der vollständigen Bearbeitung der Zahnkanten dienende und eine axiale Vorschubbewegung realisierende Relativbewegung mit einer zur Verzahnungsachse (Z) der zu bearbeitenden Verzahnung parallelen Richtungskomponente ausführen lässt.

2. Verfahren nach Anspruch 1, bei dem die Schnittrichtung (5) der Schneidbewegung eine durch den von Null verschiedenen Achskreuzwinkel bewirkte Richtungskomponente aufweist, die entlang der an die bearbeitete Zahnkante anschließenden Zahnflanke in Zahnbreitenrichtung verläuft.

3. Verfahren nach einem der vorhergehenden Ansprüche, bei dem der Achskreuzwinkel ($\Sigma$) wenigstens 4°, bevorzugt wenigstens 8°, insbesondere wenigstens 12° beträgt und/oder der Achskreuzwinkel höchstens 45°, bevorzugt höchstens 35°, insbesondere höchstens 25° beträgt.

4. Verfahren nach einem der vorhergehenden Ansprüche, bei dem der Neigungswinkel wenigstens 8°, bevorzugt wenigstens 16°, insbesondere wenigstens 24° beträgt und/oder der Neigungswinkel höchstens 80°, bevorzugt höchstens 60°, insbesondere höchstens 40° beträgt.

5. Verfahren nach einem der vorhergehenden Ansprüche, bei dem die Schnittgeschwindigkeit wenigstens 10 m/min, bevorzugt wenigstens 20 m/min, insbesondere wenigstens 50 m/min beträgt und/oder höchstens 450 m/min, bevorzugt höchstens 300 m/min, weiter bevorzugt höchstens 200 m/min, insbesondere höchstens 150 m/min beträgt.

6. Verfahren nach einem der vorhergehenden Ansprüche, bei dem eine eine Bearbeitung mit vergrößertem Bearbeitungsbereich der Zahnkanten bewirkende Struktur in das Bearbeitungswerkzeug eingearbeitet ist.

7. Steuerprogramm, das, wenn auf einer Steuereinrichtung einer Bearbeitungsstation und/oder Verzahnungsmaschine ausgeführt, diese zur Durchführung eines Verfahrens nach einem der Ansprüche 1 bis 6 steuert.

8. Bearbeitungsstation zur Bearbeitung der zwischen jeder Stirnseite (3) und den Zahnflanken einer Verzahnung (2) ausgebildeten Zahnkanten mit

   einer drehend antreibbaren Werkstückspindel zur Aufnahme eines die zu bearbeitende Verzahnung aufweisenden Werkstücks,
   einer drehend antreibbaren Werkzeugspindel zur Aufnahme eines Bearbeitungswerkzeugs,

   wobei ein von Null verschiedener Achskreuzwinkel ($\Sigma$) zwischen der Werkzeugspindelachse und der Werkstückspindelachse (Z) einstellbar ist, und eine Steuervorrichtung vorgesehen ist, die die Spindeldrehungen bei einem von Null verschieden eingestellten Achskreuzwinkel zu einem Wälzeingriff zwischen der zu bearbeitenden Verzahnung (2) und einer Verzahnung des Bearbeitungswerkzeugs (1) steuert, **dadurch gekennzeichnet, daß** ein von Null verschiedener Neigungswinkel ($\eta$) der Werkzeugspindelachse gegenüber einer orthogonal zur Verbindungsrichtung zwischen den Zentren von Verzahnung und Bearbeitungswerkzeug stehenden Ebene einstellbar ist und daß die Steuervorrichtung mit einem Steuerprogramm nach Anspruch 7 ausgestattet ist und die Bearbeitungsstation damit zur Ausführung eines Verfahrens nach einem der Ansprüche 1 bis 6 steuert, und wobei eine eine Relativbewegung zwischen Werkstückspindel und Werkzeugspindel mit Bewegungskomponente parallel zur Werkstückspindelachse bewirkende Maschinenachse vorgesehen ist.

9. Bearbeitungsstation nach Anspruch 8, mit einer der Zustellung dienenden Linearachse, insbesondere ersten Maschinenachse (X) mit einer Richtungskomponente radial zur Werkstückspindelachse, insbesondere radial zur Werkstückspindelachse verlaufend.

10. Bearbeitungsstation nach einem der Ansprüche 8 oder 9, bei der eine weitere Maschinendrehachse vorgesehen ist, die eine sowohl zu der der Einstellung des Achskreuzwinkels (Z) dienenden Drehachse als auch eine zur Werkstückspindelachse orthogonale Achskomponente aufweist.

11. Bearbeitungsstation nach einem der Ansprüche 8 bis 10, bei der eine zweite lineare Maschinenachse vorgesehen ist, die eine Komponente in einer orthogonal zur Werkstückspindelachse verlaufenden Ebene aufweist, wobei diese Komponente von einer Projektion der ersten Maschinenachse auf diese Ebene linear unabhängig ist.

12. Bearbeitungsstation nach einem der Ansprüche 8 bis 11, bei der das Bearbeitungswerkzeug scheibenförmig ist.

13. Bearbeitungsstation nach einem der Ansprüche 8 bis 12, bei der das Bearbeitungswerkzeug einen Treppenschliff aufweist.

14. Bearbeitungsstation nach einem der Ansprüche 8 bis 13, bei der eine eine Bearbeitung mit vergrößerten Bearbeitungsbereich der Zahnkanten einer Stirnseite bewirkende Struktur in das Bearbeitungswerkzeug (10) eingearbeitet ist.

15. Verzahnungsmaschine zur Bearbeitung von Verzahnungen mit einer Bearbeitungsstation nach einem der Ansprüche 8 bis 14, insbesondere mit einer weiteren Arbeitsstation zur Erzeugung der zu bearbeitenden Verzahnung im Weichbearbeitungsverfahren, beispielsweise durch Wälzfräsen, Wälzstoßen oder Power-Skiving.

**Claims**

1. A method for machining the tooth edges formed between a face side (3) and the tooth flanks of toothing (2), wherein a machining tool (1) provided with a blade removes material from the tooth edges of the toothing (2) by means of a cutting action, which toothing rotates about its toothing axis (Z) and thus produces a bevel on the tooth edges,

   the machining tool being toothed and, for the material removal, rotating about its toothing axis ($Z_w$), being brought into rolling engagement with the toothing that is to be machined at an axis-crossing angle ($\Sigma$) different from zero between the rotary axes ($Z$, $Z_w$) of the machining tool and the toothing (2) that is to be machined, **characterised in that** the cutting direction (s) of the cutting movement has a directional component running orthogonally to the tooth flank resulting from an angle of inclination ($\eta$) of the rotary axis of the machining tool which is different from zero relative to a plane extending orthogonally to the connecting direction between the centres of the toothing and the machining tool and **in that** one allows the machining tool (1) and the toothing (2) to be machined to perform a relative movement with a directional component parallel to the toothing axis (Z) of the toothing to be machined, said relative movement serving to completely machine the tooth edges and realizing an axial advance feed motion.

2. The method according to Claim 1, wherein the cutting direction (5) of the cutting movement has a directional component resulting from the axis-crossing angle different from zero and which runs along the tooth flank adjoining the machined tooth edge in the direction of the tooth width.

3. The method according to any of the preceding claims, wherein the axis-crossing angle ($\Sigma$) is at least 4°, preferably at least 8°, in particular at least 12°, and/or the axis-crossing angle is at most 45°, preferably at most 35°, in particular at most 25°.

4. The method according to any of the preceding claims, wherein the angle of inclination (11) is at least 8°, preferably at least 16°, in particular at least 24°, and/or the angle of inclination is at most 80°, preferably at most 60°, in particular at most 40°.

5. The method according to any of the preceding claims, wherein the cutting speed is at least 10 m/min, preferably at least 20 m/min, in particular at least 50m/min, and/or at most 450 m/min, preferably at most 300 m/min, even more preferably at most 200 m/min, in particular at most 150 m/min.

6. The method according to any of the preceding claims, wherein the machining tool is configured with a structure resulting in machining with an enlarged machining area of the tooth edges.

7. A control programme which, when implemented on a control device of a machining station and/or a toothing machine, controls the latter such that it implements a method according to any of Claims 1 to 6.

8. A machining station for machining the tooth edges formed between each face side (3) and the tooth flanks of toothing (2), comprising

   a workpiece spindle that can be driven rotationally to hold a workpiece that has the toothing to be machined, a workpiece spindle that can be driven rotationally to hold a machining tool, an axis-crossing angle (Σ) different from zero being able to be set between the tool spindle axis and the workpiece spindle axis (Z), and a control apparatus being provided which controls the spindle rotations for rolling engagement between the toothing (2) to be machined and toothing of the machining tool (1) at an axis-crossing angle set to be different from zero, **characterised in that** an angle of inclination (η) different from zero of the tool spindle axis can be set with respect to a plane that extends orthogonally to the connecting direction between the centres of the toothing and the machining tool, and that the control apparatus is equipped with a control programme according to Claim 7, and so controls the machining station to implement a method according to any of the claims 1 to 6, and wherein a machine axis resulting in a relative movement between the workpiece spindle and the tool spindle with a movement component parallel to the workpiece spindle axis is provided.

9. The machining station according to Claim 8, having a linear axis serving to deliver, in particular a first machine axis (X) with a directional component radial to the workpiece spindle axis, in particular running radially to the workpiece spindle axis.

10. The machining station according to any of Claims 8 or 9, wherein a further rotary machine axis is provided which comprises a rotary axis serving to set the axis-crossing angle (Σ) as well as an axis component orthogonal to the workpiece spindle axis.

11. The machining station according to any of Claims 8 to 10, wherein a second linear machine axis is provided which comprises a component in a plane running orthogonally to the workpiece spindle axis, this component being linearly independent of a projection of the first machine axis onto this plane.

12. The machining station according to any of Claims 8 to 11, wherein the machining tool is disc-shaped.

13. The machining station according to any of Claims 8 to 12, wherein the machining tool has a stepped contour.

14. The machining station according to any of Claims 8 to 13, wherein the machining tool (10) is configured with a structure resulting in machining with an enlarged machining area of the tooth edges of a face side.

15. A toothing machine for machining toothing, comprising a machining station according to any of Claims 8 to 14, in particular with a further work station for producing the toothing to be machined by the soft-machining process, for example by hobbing, gear shaping or power skiving.

**Revendications**

1. Procédé d'usinage des arêtes de dents conçues entre une face frontale (3) et les flancs de dent d'une denture (2), dans lequel un outil d'usinage (1) pourvu d'un tranchant enlève, par taillage, de la matière des arêtes de dents de la denture (2) tournant sur son axe de denture (Z) et crée ainsi un chanfrein sur les arêtes de dents, dans lequel

   l'outil d'usinage est denté et, pour réaliser l'enlèvement de matière, est amené en contact de taillage avec la denture à usiner, en tournant sur son axe de denture ($Z_w$) avec un angle de croisement d'axes (Σ) non nul entre les axes de rotation (Z, $Z_w$) de l'outil d'usinage et de la denture à usiner (2), **caractérisé en ce que** la direction de coupe (s) du mouvement de coupe présente une composante de direction orthogonale au flanc de dent occasionnée par un angle d'inclinaison (η) non nul de l'axe de rotation de l'outil d'usinage par rapport à un plan orthogonal au sens de liaison entre les centres de la denture et de l'outil d'usinage et **en ce que** on amène l'outil d'usinage (1) et la denture à usiner (2) à exécuter un mouvement relatif présentant une composante de direction parallèle à l'axe de denture (Z) de la denture à usiner pour réaliser l'usinage complet des arêtes de dents et réalisant un mouvement de l'avancement axial.

2. Procédé selon la revendication 1, dans lequel la direction de coupe (5) du mouvement de coupe présente une composante de direction occasionnée par l'angle de croisement d'axes non nul, laquelle, dans le sens de la largeur de la dent, est orientée le long du flanc de dent contigu à l'arête de dent usinée.

3. Procédé selon l'une quelconque des revendications précédentes, dans lequel l'angle de croisement d'axes ($\Sigma$) est d'au moins 4°, de préférence d'au moins 8°, notamment d'au moins 12° et/ou l'angle de croisement d'axes est d'au maximum 45°, de préférence d'au maximum 35°, notamment d'au maximum 25°.

4. Procédé selon l'une quelconque des revendications précédentes, dans lequel l'angle d'inclinaison ($\eta$) est d'au moins 8°, de préférence d'au moins 6°, notamment d'au moins 24° et/ou l'angle d'inclinaison est d'au maximum 80°, de préférence d'au maximum 60°, notamment d'au maximum 40°.

5. Procédé selon l'une quelconque des revendications précédentes, dans lequel la vitesse de coupe est d'au moins 10 m/min, de préférence d'au moins 20 m/min, notamment d'au moins 50 m/min et/ou d'au maximum 450 m/min, de préférence d'au maximum 300 m/min, plus préférablement d'au maximum 200 m/min, notamment d'au maximum 150 m/min.

6. Procédé selon l'une quelconque des revendications précédentes, dans lequel une structure est prévue dans l'outil d'usinage, laquelle occasionne un usinage présentant une zone d'usinage agrandie des arêtes de dents.

7. Programme de commande qui, lorsqu'il est exécuté sur une installation de commande d'un poste d'usinage et/ou d'une machine de fabrication d'engrenages, commande ceux-ci afin de mettre en oeuvre un procédé selon l'une des revendications 1 à 6.

8. Poste d'usinage permettant d'usiner les arêtes de dents conçues entre chaque face frontale (3) et les flancs de dent d'une denture (2), comportant :

une broche porte-pièce susceptible d'être entraînée en rotation et destinée à recevoir une pièce à usiner présentant ladite denture à usiner,
une broche porte-outil susceptible d'être entraînée en rotation et destinée à recevoir un outil d'usinage,
dans lequel un angle de croisement d'axes ($\Sigma$) non nul entre l'axe de broche porte-outil et l'axe de broche porte-pièce (Z) peut être établi, et il est prévu un dispositif de commande qui commande la rotation des broches avec un angle de croisement d'axes non nul établi, pour obtenir un contact de taillage entre la denture à usiner (2) et une denture de l'outil d'usinage (1), **caractérisé en ce qu'**un angle d'inclinaison ($\eta$) non nul de l'axe de broche porte-outil peut être établi par rapport à un plan orthogonal au sens de liaison entre les centres de la denture et de l'outil d'usinage et **en ce que** le dispositif de commande est équipé d'un programme de commande selon la revendication 7 et commande ainsi le poste d'usinage afin de mettre en oeuvre un procédé selon l'une quelconque des revendications 1 à 6, et dans lequel il est prévu un axe machine occasionnant un mouvement relatif entre la broche porte-pièce et la broche porte-outil présentant une composante de mouvement parallèle à l'axe de broche porte-pièce.

9. Poste d'usinage selon la revendication 8, comportant un axe linéaire servant à la disposition, notamment un premier axe machine (X) présentant une composante de direction radiale par rapport à l'axe de broche porte-pièce, orientée notamment radialement par rapport à l'axe de broche porte-pièce.

10. Poste d'usinage selon l'une des revendications 8 ou 9, dans lequel il est prévu un autre axe de rotation machine présentant une composante d'axe orthogonale à la fois à l'axe de rotation servant à l'établissement de l'angle de croisement d'axes ($\Sigma$) et à l'axe de broche porte-pièce.

11. Poste d'usinage selon l'une des revendications 8 à 10, dans lequel il est prévu un deuxième axe machine linéaire présentant une composante dans un plan orthogonal à l'axe de broche porte-pièce, cette composante dépendant de façon linéaire d'une projection du premier axe machine sur ce plan.

12. Poste d'usinage selon l'une des revendications 8 à 11, dans lequel l'outil d'usinage est en forme de disque.

13. Poste d'usinage selon l'une des revendications 8 à 12, dans lequel l'outil d'usinage est taillé en escalier.

14. Poste d'usinage selon l'une des revendications 8 à 13, dans lequel une structure est prévue dans l'outil d'usinage (10), laquelle occasionne un usinage présentant une zone d'usinage agrandie des arêtes de dents d'une face frontale.

15. Machine de fabrication d'engrenages destinée à usiner des dentures à l'aide d'un poste d'usinage selon l'une des revendications 8 à 14, notamment à l'aide d'un poste d'usinage supplémentaire permettant de produire la denture à usiner selon un procédé d'usinage doux, par exemple par taillage en développante, mortaisage ou power-skiving.

**Fig. 1**

**Fig. 2**

Fig. 4

Fig. 3a

Fig. 3b

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009019433 A1
- EP 1270127 A1
- DE 102009018405 A1
- DE 102009019433
- US 2683399 A
- JP S618221 A
- GB 818135 A
- DE 2157619 A
- EP 2537615 A1